# EUROPÄISCHE PATENTSCHRIFT

(11) **EP 2 534 279 B1**
(45) Veröffentlichungstag und Bekanntmachung des Hinweises auf die Patenterteilung: **07.05.2014**
(21) Anmeldenummer: 11701053.8
(22) Anmeldetag: 17.01.2011
(51) Int. Cl.: C23C 22/60, C23C 22/73, C23C 22/34, C09D 5/08

(54) **ZUSAMMENSETZUNG FÜR DIE ALKALISCHE PASSIVIERUNG VON ZINKOBERFLÄCHEN**
COMPOSITION FOR THE ALKALINE PASSIVATION OF ZINC SURFACES
COMPOSITION POUR LA PASSIVATION ALCALINE DE SURFACES EN ZINC

(30) Priorität: 09.02.2010 DE 102010001686
(43) Veröffentlichungstag der Anmeldung: 19.12.2012
(73) Patentinhaber: Henkel AG & Co. KGaA, 40589 Düsseldorf (DE)
(72) Erfinder: BROUWER, Jan-Willem, 47877 Willich (DE); KRÖMER, Jens, 40225 Düsseldorf (DE); FRISTAD, William E., Rochester, Michigan 48306 (US); WILLER, Annette, 41462 Neuss (DE)
(74) Vertreter: Stromberg, Christian
(86) Internationale Anmeldenummer: PCT/EP2011/050526
(87) Internationale Veröffentlichungsnummer: WO 2011/098322

(56) Entgegenhaltungen:
- DE-A1- 19 733 972
- US-A- 3 444 007
- US-A- 3 515 600
- US-A- 5 294 266

## Beschreibung

Die vorliegende Erfindung betrifft eine wässrige alkalische Zusammensetzung (A) zur alkalischen Passivierung von metallischen Bauteilen, die zumindest teilweise Oberflächen von Zink oder Zinklegierungen aufweisen, enthaltend Eisen(III)-Ionen, Phosphat-Ionen und einen oder mehrere Komplexbildner, wobei eine freie Alkalität im Bereich von 1-6 Punkten eingestellt ist und der pH-Wert zumindest 10,5 beträgt. Die erfindungsgemäßen wässrigen Zusammensetzungen (A) können zusätzlich nichtionische Tenside enthalten, so dass derartige Zusammensetzungen sich zur Anwendung in einem Verfahren eignen, bei dem sowohl die Reinigung als auch die alkalische Passivierung des metallischen Bauteils in einem Schritt erfolgt. Ferner betrifft die vorliegende Erfindung ein Verfahren zur alkalischen Passivierung und ggf. Reinigung metallischer Bauteile, die zumindest teilweise Oberflächen von Zink oder Zinklegierungen aufweisen, durch In-Kontakt-bringen derselben mit der Zusammensetzung (A). Insbesondere wird erfindungsgemäß ein Verfahren für die Oberflächenbehandlung in der automobilen Karosseriefertigung umfasst, bei dem der alkalischen Passivierungsstufe unter Verwendung der Zusammensetzung (A) eine saure Passivierungsstufe unter Verwendung einer Zusammensetzung (B) nachfolgt, wodurch im Vergleich zu passivierenden Verfahren, die auf eine alkalische Passivierungsstufe verzichten, eine Verbesserung der Korrosionsbeständigkeit und der Haftung zu nachträglich aufgebrachten organischen Lacksystemen, speziell auf den Zinkoberflächen des metallischen Bauteils, erzielt wird.

Korrosionsschutzmittel, die eine saure wässrige Lösung von Fluoro-Komplexen darstellen, sind seit langem bekannt und substituieren die im Stand der Technik lange eingesetzten Chromatierverfahren zur passivierenden Vorbehandlung. Neuerdings werden derartige Korrosionsschutzmittel, die lediglich ein dünne Konversionsschicht auf den behandelten Metalloberflächen hervorrufen, auch als Ersatz für Phosphatierverfahren diskutiert und insbesondere in der Automobilzuliefereindustrie eingesetzt, um das mehrstufige Phosphatierverfahren, das mit hohen Stoffumsätzen verbunden ist, gegen Verfahren mit niedrigerem Stoffumsatz und niedrigerem verfahrenstechnischen Aufwand zu substituieren. In der Regel enthalten derartige Lösungen von Fluoro-Komplexen weitere korrosionsschützende Wirkstoffe, die Korrosionsschutzwirkung und Lackhaftung weiter verbessern.

Beispielsweise beschreibt die WO 07/065645 wässrige Zusammensetzungen, die Fluorokomplexe von unter anderem Titan- und/oder Zirkon enthalten, wobei zusätzlich eine weitere Komponente enthalten ist, die ausgewählt ist aus: Nitrat-Ionen, Kupfer-Ionen, Silber-Ionen, Vanadium- oder Vanadat-Ionen, Wismut-Ionen, Magnesium-Ionen, Zink-Ionen, Mangan-Ionen, Kobalt-Ionen, Nickel-Ionen, Zinn-Ionen, Puffersystemen für den pH-Bereich von 2,5 bis 5,5, aromatischen Carbonsäuren mit mindestens zwei Gruppen, die Donoratome enthalten, oder Derivaten solcher Carbonsäuren, Kieselsäure-Partikel mit einer mittleren Teilchengröße unterhalb von 1 µm.

Es besteht ein Bedarf die korrosionsschützende Vorbehandlung von Metalloberflächen weiter voranzutreiben und an die Leistungsmerkmale hinsichtlich Korrosionsschutz und Lackhaftung einer Trikation-Zinkphosphatierung heranzuführen. Hierbei ist nicht mehr allein die Anzahl der einzelnen Verfahrensschritte für den Erfolg einer Vorbehandlung ausschlaggebend, sondern die Performance der Beschichtung insbesondere in Hinblick auf die Vorbehandlung von Bauteilen, die aus den Werkstoffen Stahl, verzinktem Stahl und Aluminium zusammengesetzt sind.

Insbesondere besteht in der Automobilindustrie häufig das Problem, dass die Oberflächen von Zink durch im Stand der Technik bekannte saure chromfreie Passivierungslösungen im Vergleich zu Stahloberflächen hinsichtlich Schutz vor korrosiver Unterwanderung der Lackschicht deutlich abfallen. Die Verbesserung der Passivierungsschichten auf den Zinkoberflächen einer aus verschiedenen Metallen zusammengesetzten Karosserie ist daher eine Voraussetzung für den Erfolg von zur Phosphatierung alternativen Vorbehandlungsverfahren.

Aus der Offenlegungsschrift WO 2009045845 ist eine außenstromlose metallisierende Vorbehandlung vor einer Zirkon-basierten Konversionsbehandlung von Metalloberflächen, insbesondere von Stahl und verzinktem Stahl, bekannt. Hierbei wird vor der Konversionsbehandlung eine Vorbehandlung mit einer sauren wässrigen Zusammensetzung enthaltend wasserlösliche Salze elektropositiver Metalle ausgewählt aus Nickel, Kupfer, Silber und/oder Gold vorgenommen. Eine solche Zusammensetzung zur Metallisierung kann zusätzlich Entschäumer und Benetzungsmittel enthalten. Bei Verwendung schwerlöslicher Kupfer-Salze wird in der WO 2009045845 vorgeschlagen Komplexbildner einzusetzen, um die Konzentration von Kupfer-Ionen in der metallisierenden Zusammensetzung zu erhöhen. Es zeigt sich, dass die in der WO 2009045845 vorgeschlagene Metallisierung vor einer Konversionsbehandlung mit einer sauren Zusammensetzung auf Basis komplexer Metallfluoride nicht diejenige Ergebnisse hinsichtlich Lackhaftung und Korrosionsbeständigkeit aufweist, die durch eine Zinkphosphatierung erzielt werden können.

Als nächstliegender Stand der Technik für die vorliegende Erfindung ist die deutsche Offenlegungsschrift DE19733972 anzusehen, die ein Verfahren zur alkalischen passivierenden Vorbehandlung von verzinkten und legierungsverzinkten Stahloberflächen in Bandanlagen beinhaltet. Hier wird das oberflächenveredelte Stahlband mit einem alkalischen Behandlungsmittel enthaltend Magnesium-Ionen, Eisen(III)-Ionen sowie einen Komplexbildner in Kontakt gebracht. Bei dem vorgegebenen pH-Wert von oberhalb von 9,5 wird die Zinkoberfläche dabei unter Ausbildung der Korrosionsschutzschicht passiviert. Eine derartig passivierte Oberfläche bietet gemäß der Lehre von DE19733972 bereits eine Lackhaftung, die mit Nickel- und Cobalt-haltigen Verfahren vergleichbar ist. Fakultativ können sich dieser Vorbehandlung zur Verbesserung des Korrosionsschutzes weitere Behandlungsschritte wie eine chromfreie Nachpassivierung anschließen, bevor das Lacksystem aufgetragen wird. Dennoch zeigt sich, dass dieses Vorbehandlungssystem die durch die Korrosion an den Schnittkanten hervorgerufene Lackenthaftung nicht zufrieden stellend zu unterbinden vermag.

Ausgehend von diesem Stand der Technik stellt sich die Aufgabe, eine alkalische Passivierung zu etablieren, die eine weitergehende Verbesserung der Korrosionsbeständigkeit der derart vorbehandelten und mit einem organischen Lacksystem beschichteten Oberflächen von Zink und/oder seinen Legierungen erzielt, wobei insbesondere die korrosive Unterwanderung und Enthaftung des Lacksystems auf den Zinkoberflächen stärker unterbunden werden soll. Gleichzeitig soll eine entsprechende alkalische Passivierung in einem Vorbehandlungsprozess, der die Reinigung, Passivierung und Beschichtung von metallischen Bauteilen, die zumindest teilweise aus Oberflächen von Zink und/oder seinen Legierungen bestehen, mit einem organischen Lacksystem vorsieht.

Diese Aufgabe wird gelöst mittels wässriger alkalischer Zusammensetzungen (A) enthaltend
a) zumindest 50 ppm an Eisen(III)-Ionen,
b) zumindest 100 ppm an Phosphat-Ionen,
c) zumindest 100 ppm an Komplexbildnern ausgewählt aus wasserlöslichen organischen Verbindungen c1), die zumindest eine funktionale Gruppe ausgewählt aus -COOX, -OPO₃X
   und/oder -PO₃X aufweisen, wobei X entweder ein H-Atom oder ein Alkali- und/oder

Erdalkalimetall-Atom darstellt, und/oder kondensierten Phosphaten c2) berechnet als PO₄, wobei die Zusammensetzung eine freie Alkalität von zumindest 1 Punkt, aber weniger als 6 Punkten, und einen pH-Wert von zumindest 10,5 aufweist.

Unter "alkalisch" wird verstanden, dass die Zusammensetzung (A) einen pH-Wert im Bereich von 10,5-14, vorzugsweise im Bereich von 11,0-13,5 aufweist. Unterhalb von einem pH-Wert von 10,5 werden keine Schichtauflagen an Eisen von zumindest 20 mg/m² auf den Zinkoberflächen bei In-Kontakt-bringen derselben mit einer Zusammensetzung (A) ausgebildet, so dass für derart niedrige pH-Werte keine alkalische Passivierung von Zinkoberflächen im Sinne der vorliegenden Erfindung erfolgt.

Ein für die Wirksamkeit der Zusammensetzungen (A) entscheidender Parameter ist die freie Alkalität. Die freie Alkalität wird dadurch bestimmt, dass man 2 ml Badlösung, vorzugsweise verdünnt auf 50 ml, mit einer 0,1 n Säure wie beispielsweise Salzsäure oder Schwefelsäure bis zu einem pH-Wert von 8,5 titriert. Der Verbrauch an Säurelösung in ml gibt die Punktzahl der freien Alkalität an.

Unter dem Begriff "kondensierten Phosphate" gemäß der Komponente c1) werden im Sinne der vorliegenden Erfindung die bei Raumtemperatur wasserlöslichen Metaphosphate (Meₙ [PₙO₃ₙ]), Di-Tri- und Polyphosphate (Meₙ₊₂[PₙO₃ₙ₊₁] oder Meₙ[H₂PₙO₃ₙ₊₁]), die Isometaphosphate und die vernetzten Polyphosphate zusammengefasst, wobei Me entweder Alkalimetall- oder Erdalkalimetall-Atome sind. Selbstverständlich können anstatt der wasserlöslichen Salze auch die entsprechenden kondensierten Säuren der Phosphorsäure für die Formulierung erfindungsgemäßer Zusammensetzungen (A) eingesetzt werden, vorausgesetzt, dass die freie Alkalität wie angegeben eingestellt ist. Der massenbezogen Anteil der "kondensierten Phosphate" gemäß Komponente c2) an der erfindungsgemäßen Zusammensetzung (A) ist stets berechnet als eine entsprechende Menge an PO₄. Analog ist für die Bestimmung derjenigen molaren Verhältnisse, die eine Menge an kondensierten Phosphaten umfasst, diese Menge an kondensierten Phosphaten stets auf die äquivalente Menge an PO₄ bezogen.

Es hat sich herausgestellt, dass eine wässrige alkalische Zusammensetzung (A) insbesondere dann eine geeignete Passivierung von Zinkoberflächen herbeiführt, die einen guten Haftungsgrund darstellt, wenn die freie Alkalität weniger als 5 Punkte aufweist. Dies gilt speziell auch für die Applikation der Zusammensetzung (A) in Spritzverfahren, die eine geeignete Passivierung insbesondere dann bewirkt, wenn die freie Alkalität weniger als 4 Punkte beträgt. Überraschenderweise hat sich herausgestellt, dass hohe Schichtauflagen an Eisen auf Zinkoberflächen oberhalb von 150 mg/m² sich eher nachteilig in der Haftung zu organischen Decklacken verhalten, so dass erfindungsgemäße Zusammensetzungen (A) eine nicht zu hohe freie Alkalität aufweisen dürfen. Jedoch sollte die freie Alkalität vorzugsweise zumindest 2 Punkte betragen, um eine hinreichende Schichtauflage auf Zinkoberflächen von zumindest 20 mg/m² bezogen auf das Element Eisen erzeugen zu können. Zusammensetzungen (A), die eine freie Alkalität oberhalb von 6 Punkten aufweisen, ergeben zwar hohe Schichtauflagen an Eisen auf den Zinkoberflächen, jedoch wird die Haftung zu nachträglich aufgebrachten Lackschichten durch hohe Schichtauflagen bezogen auf das Element Eisen deutlich herabgesetzt, so dass auch der Korrosionsschutz weniger effektiv bzw. unzureichend ist.

Der Anteil an Eisen(III)-Ionen in der Zusammensetzung beträgt vorzugsweise nicht mehr als 2000 ppm. Höhere Anteile an Eisen(III)-Ionen sind für die Verfahrensführung ungünstig, da die Löslichkeit der Eisen(III)-Ionen im alkalischen Medium durch entsprechend hohe Anteile an Komplexbildner aufrecht erhalten werden muss, ohne dass hinsichtlich der Passivierung der Zinkoberflächen günstigere Eigenschaften erzielt werden. Bevorzugt sind allerdings solche Zusammensetzungen (A), in denen der Anteil an Eisen(III)-Ionen zumindest 100 ppm, besonders bevorzugt zumindest 200 ppm beträgt, um gut passivierende anorganische Schichten auf den Zinkoberflächen zu erhalten, die sich innerhalb verfahrenstypischer Behandlungszeiten von weniger als zwei Minuten vollständig ausbilden.
Die Komplexbildner gemäß Komponente c) der erfindungsgemäßen alkalischen Zusammensetzung (A) sind vorzugsweise in einer solchen Menge enthalten, dass das molare Verhältnis aller Komponenten c) zu Eisen(III)-Ionen größer als 1 : 1 ist und besonders bevorzugt zumindest 2 : 1, insbesondere bevorzugt zumindest 5 beträgt. Es zeigt sich, dass der Einsatz der Menge an Komplexbildnern im stöchiometrischen Überschuss vorteilhaft für die Verfahrensführung ist, da auf diese Weise der Anteil an Eisen(III)-Ionen dauerhaft in Lösung gehalten wird. Das Ausfällen unlöslicher Eisenhydroxide wird auf diese Weise vollständig unterdrückt, so dass die Zusammensetzung (A) dauerhaft stabil bleibt und nicht an Eisen(III)-Ionen verarmt. Gleichzeitig findet dennoch eine hinreichende Abscheidung einer anorganischen Schicht enthaltend EisenIonen auf den Zinkoberflächen statt. Ein Überschuss an Komplexbildner unterdrückt also nicht die Ausfällung und Abscheidung unlöslicher Eisensalze in einer Reaktionszone unmittelbar an der Zinkoberfläche, in der aufgrund des Beizangriffes der Zusammensetzung (A) die Alkalität erhöht ist. Aus Gründen der Wirtschaftlichkeit und für einen ressourcenschonenden Einsatz der Komplexbildner ist es dennoch bevorzugt, dass das molare Verhältnis der Komponenten c) zu Eisen(III)-Ionen in der Zusammensetzung den Wert 10 nicht überschreitet.

Die in der erfindungsgemäßen Zusammensetzung (A) enthaltenen Phosphat-Ionen sind neben den Eisen-Ionen ein wesentlicher Bestandteil der Passivierungsschicht, die sich nach In-Kontakt-bringen der Zusammensetzung (A) mit einer Zinkoberfläche auf derselben ausbildet. Für die Ausbildung von Passivschichten auf Zinkoberflächen, die vorteilhaft für eine weitergehende Passivierung sind und zudem eine gute Haftung zu nachträglich aufgebrachten Lackschichten vermitteln, ist es bevorzugt, dass erfindungsgemäße Zusammensetzungen vorzugsweise zumindest 200 ppm, besonders bevorzugt zumindest 500 ppm an Phosphat-Ionen enthalten. Die Eigenschaften der Passivschichten, die sich bei In-Kontakt-bringen einer Zinkoberfläche mit erfindungsgemäßen Zusammensetzungen (A) ausbilden, werden oberhalb eines Anteils an Phosphat-Ionen von 4 g/kg nicht weiter positiv beeinflusst, so dass aus Gründen der Wirtschaftlichkeit der Anteil an Phosphat-Ionen in der Zusammensetzung (A) vorzugsweise unterhalb von 10 g/kg liegen sollte.

Das Verhältnis von Eisen(III)-Ionen zu Phosphat-Ionen kann in einem weiten Bereich variiert werden, solange die Mindestmengen an beiden Komponenten in der Zusammensetzung (A) enthalten sind. Vorzugsweise liegt das massenbezogene Verhältnis von Eisen(III)-Ionen zu Phosphat-Ionen in einer erfindungsgemäßen Zusammensetzung in einem Bereich von 1 : 20 bis 1 : 2, besonders bevorzugt in einem Bereich von 1 : 10 bis 1 : 3. Erfindungsgemäße Zusammensetzungen (A), die ein solches Massenverhältnis der Komponenten a) zu b) aufweisen, liefern nach dem In-Kontakt-bringen mit einer Zinkoberfläche homogene schwarzgraue Passivschichten enthaltend Phosphat-Ionen mit Schichtauflagen von 20-150 mg/m² bezogen auf das Element Eisen.

Kondensierte Phosphate sind in der Lage Eisen(III)-Ionen in einem alkalischen Medium durch Komplexierung in Lösung zu halten. Obwohl für die Art der kondensierten Phopshate keine besonderen Einschränkungen hinsichtlich ihrer Verwendbarkeit für erfindungsgemäße Zusammensetzung (A) bestehen, sind solche kondensierten Phosphate bevorzugt, die ausgewählt sind aus Pyrophosphaten, Tripolyphosphaten und/oder Polyphosphaten, besonders bevorzugt aus Pyrophosphaten, da diese besonders gut wasserlöslich und sehr leicht zugänglich sind.

Als organische Verbindungen c1), die ebenfalls oder alternativ zu den kondensierten Phosphaten als Komplexbildner in der Zusammensetzung (A) enthalten sind, werden solche Verbindungen bevorzugt, die in ihrer Säureform (X = H-Atom), eine Säurezahl von zumindest 250 aufweisen. Niedrigere Säurezahlen verleihen den organischen Verbindungen oberflächenaktive Eigenschaften, so dass organischen Verbindungen c1) mit Säurezahlen unterhalb 250 als Aniontenside stark emulgierend wirken können. Die emulgierende Wirkung kann soweit ausgeprägt sein, dass aus der Reinigungsstufe über das metallische Bauteil eingeschleppte Verschmutzungen in Form von Ölen und Ziehfetten nur über aufwendige Trennverfahren aus der alkalischen Passivierungsstufe entfernt werden können, bspw. durch eine Zudosierung von Kationtensiden, so dass weitere Prozessparameter zu kontrollieren sind. Vorteilhafter ist es daher, die alkalische Passivierungsstufe und damit die Zusammensetzung (A) nur leicht emulgierend einzustellen, um eine herkömmliche Abtrennung der aufschwimmenden Öle und Fette zu ermöglichen. Aniontenside neigen zudem zu einer ausgeprägten Schaumbildung, die beispielsweise bei der Spritzapplikation der Zusammensetzung (A) besonders nachteilig ist. Vorzugsweise werden daher organische Komplexbildner c1) mit Säurezahlen von zumindest 250 in der erfindungsgemäßen Zusammensetzung eingesetzt. Die Säurezahl gibt dabei die Menge an Kaliumhydroxid in Milligramm an, die benötigt wird, um 1 g der organischen Verbindung c1) in 100 g Wasser gemäß DIN EN ISO 2114 zu neutralisieren.

Bevorzugte organische Komplexbildner c1) in der erfindungsgemäßen Zusammensetzung (A) sind ausgewählt sind aus α-, β- und/oder γ-Hydroxycarbonsäuren, Hydroxyethan-1,1-Diphosphonsäure, [(2-hydroxyethyl)(phosphonomethyl)amino]-methylphosphonsäure, Diethylenetriaminpentakis(methylenphosphonsäure) und/oderAmino-tris-(methylenphosphonsäure) sowie deren Salze.

Erfindungsgemäß werden also explizit solche Zusammensetzungen (A) umfasst, die ausschließlich kondensierte Phosphate c2), ausschließlich organische Komplexbildner c1) oder ein Mischung von beiden enthalten. Der Anteil an organischem Komplexbildner c1) in der Zusammensetzung (A) kann jedoch in dem Maß reduziert werden, in dem Komplexbildner c2) ausgewählt aus kondensierten Phosphaten enthalten ist. In einer besonderen Ausführungsform der Zusammensetzung (A) sind demnach Komplexbildner c2) ausgewählt aus kondensierten Phosphaten und organische Komplexbildner c1) enthalten, wobei das molare Verhältnis aller Komponenten c) zu Eisen(III)-Ionen größer als 1 : 1 ist, jedoch das molare Verhältnis von Komponenten c1) zu Eisen(III)-Ionen kleiner als 1 : 1, besonders bevorzugt kleiner als 3 : 4 ist, aber vorzugsweise zumindest 1 : 5 beträgt. Eine Mischung der beiden Komplexbildner c1) und c2) ist insofern vorteilhaft, da die kondensierten Phosphate im alkalischen Medium bei erhöhter Temperatur mit den Phosphat-Ionen der Zusammensetzung (A) im Gleichgewicht stehen, so dass durch Schichtbildung verbrauchte Phosphat-Ionen aus den kondensierten Phosphaten langsam nachgebildet werden. Umgekehrt reicht allerdings die Anwesenheit von kondensierten Phosphaten allein nicht aus, um eine alkalische Passivierungsschicht enthaltend Eisen und Phosphat auf den Zinkoberflächen herbeizuführen, so dass der Anteil an Phosphat-Ionen in der Zusammensetzung (A) obligat ist. In Anwesenheit der kondensierten Phosphate wird jedoch speziell die Ausfällung schwerlöslicher Phosphate, bspw. Eisenphosphate, durch das Zusammenwirken mit den organischen Komplexbildnern c2) auch bei hohen pH-Werten oberhalb von 10 unterdrückt, so dass Zusammensetzungen (A) die eine Mischung der Komplexbildner enthalten erfindungsgemäß bevorzugt sind, wobei vorzugsweise darauf zu achten ist, dass das molare Verhältnis von Komponenten c1) zu Eisen(III)-Ionen zumindest 1 : 5 beträgt.

Um das Reinigungsvermögen für die zu behandelnden Metalloberflächen zu erhöhen, kann die erfindungsgemäße Zusammensetzung zusätzlich nichtionische Tenside enthalten. Diese zusätzliche Reinigung und Aktivierung der Metalloberflächen mittels Zusammensetzungen (A) enthaltend nichtionische Tenside erbringt den Vorteil, dass die Passivschichtbildung auf den Zinkoberflächen im Vergleich zu erfindungsgemäßen Zusammensetzungen (A), die keine nichtionischen Tenside als oberflächenaktive Substanzen enthalten, homogener erfolgt. Eine auf den Zinkoberflächen des metallischen Bauteils homogen ausgebildete Passivierung ist eine Grundvoraussetzung für eine ebenfalls homogene Haftung von organischen Lacksystemen, die nachträglich auf das metallische Bauteil aufgebracht werden. Die nichtionischen Tenside sind dabei vorzugsweise ausgewählt aus einem oder mehreren ethoxylierten und/oder propoxylierten C10-C18 Fettalkoholen mit insgesamt zumindest zwei aber nicht mehr als 12 Alkoxygruppen, besonders bevorzugt Ethoxy- und/oder Propoxygruppen, die teilweise mit einem Alkylrest, besonders bevorzugt mit einem Methyl-, Ethyl-, Propyl-, Butyl-Rest endgrupppenverschlossen vorliegen können. Der Anteil an nichtionischen Tensiden in einer erfindungsgemäßen Zusammensetzung (A) beträgt für eine hinreichende Reinigung und Aktivierung der Metalloberflächen vorzugsweise zumindest 10 ppm, besonders bevorzugt zumindest 100 ppm, wobei aus wirtschaftlichen Gründen vorzugsweise nicht mehr als 10 g/kg an nichtionischen Tensiden enthalten sind. Der Einsatz stark emulgierenden anionischen Tensiden sollte in der erfindungsgemäßen Zusammensetzung (A) aus den bereits zuvor erläuterten Gründen vermieden werden, so dass ihr Anteil an Zusammensetzungen (A) vorzugsweise nicht oberhalb von 500 ppm, besonders bevorzugt nicht oberhalb von 100 ppm liegt.
Ein weiterer Vorteil der vorliegenden Erfindung besteht darin, dass auf Zusätze von SchwermetallIonen, die in herkömmlichen alkalischen Zusammensetzungen zur Passivierung von Zinkoberflächen eingesetzt werden, gänzlich verzichtet werden kann, so dass die erfindungsgemäße Zusammensetzung (A) vorzugsweise keine Schwermetalle ausgewählt aus Nickel, Cobalt, Mangan, Molybdän, Chrom und/oder Cer enthält. Allerdings kann die Anwesenheit geringer Mengen dieser Schwermetalle in der erfindungsgemäßen Zusammensetzung (A), die in einer Passivierungsstufe beim Betrieb einer Vorbehandlungslinie verwendet wird, nicht ganz vermieden werden. So sind beispielsweise Nickel und Mangan übliche Legierungsbestandteile von Stahl, die bei Behandlung mit der Zusammensetzung (A) über die partielle Auflösung nativer Oxidschichten in die Passivierungsstufe gelangen können.
Vorzugsweise enthält die erfindungsgemäße Zusammensetzung (A) daher weniger als insgesamt 10 ppm an ionischen Verbindungen der Metalle Nickel, Cobalt, Mangan, Molybdän, Chrom und/oder Cer, insbesondere weniger als 1 ppm an ionischen Verbindungen der Metalle Nickel und/oder Cobalt.

Das Anbeizen der Zinkoberflächen des metallischen Bauteils während der alkalischen Passivierung des erfindungsgemäßen Verfahrens führt dazu, dass Zink-Ionen in die wässrige Zusammensetzung (A) gelangen. Dies gilt auch für Aluminium-Ionen insofern metallische Bauteile behandelt werden, die neben den Zinkoberflächen auch Oberflächen von Aluminium aufweisen. Metall-Kationen der Elemente Zink und Aluminium üben jedoch keinen negativen Einfluss auf die Wirksamkeit der Zusammensetzungen (A) aus und sind daher tolerabel.

Eine besondere Ausführungsform der erfindungsgemäßen Zusammensetzung (A) enthält
a) 0,05-2 g/kg an Eisen(III)-Ionen,
b) 0,1-4 g/kg an Phosphat-Ionen,
c) zumindest 0,1 g/kg an Komplexbildnern ausgewählt aus organischen Verbindungen c1), die zumindest eine funktionale Gruppe ausgewählt aus -COOX, -OPO₃X und/oder -PO₃X aufweisen, wobei X entweder ein H-Atom oder ein Alkali- und/oder Erdalkalimetall-Atom darstellt, und/oder kondensierten Phosphaten c2) berechnet als PO₄,
d) insgesamt 0,01-10 g/kg an nichtionischen Tensiden,
e) insgesamt weniger als 10 ppm an ionischen Verbindungen der Metalle Nickel, Cobalt, Mangan, Molybdän, Chrom und/oder Cer, insbesondere weniger als 1 ppm an ionischen Verbindungen der Metalle Nickel und/oder Cobalt,
wobei nicht mehr als 10 g/l an kondensierten Phosphaten c2) berechnet als PO₄ enthalten sind und das molare Verhältnis der Summe der Komponenten c1) und c2) zu Eisen(III)-Ionen größer als 1 : 1 ist und wobei die freie Alkalität weniger als 6 Punkte beträgt und der pH-Wert zumindest 10,5 ist.

Insbesondere werden von der Erfindung solche Zusammensetzung (A) umfasst, die sich folgendermaßen zusammensetzen:
a) 0,05-2 g/kg an Eisen(III)-Ionen,
b) 0,1-4 g/kg an Phosphat-Ionen,
c) zumindest 0,1 g/kg an Komplexbildnern ausgewählt aus organischen Verbindungen c1), die zumindest eine funktionale Gruppe ausgewählt aus -COOX, -OPO₃X und/oder -PO₃X aufweisen, wobei X entweder ein H-Atom oder ein Alkali- und/oder Erdalkalimetall-Atom darstellt, und/oder kondensierten Phosphaten c2) berechnet als PO₄,
d) insgesamt 0,01-10 g/kg an nichtionischen Tensiden,
e) insgesamt weniger als 10 ppm an ionischen Verbindungen der Metalle Nickel, Cobalt, Mangan, Molybdän, Chrom und/oder Cer, insbesondere weniger als 1 ppm an ionischen Verbindungen der Metalle Nickel und/oder Cobalt,
f) insgesamt weniger als 0,1 g/kg an organischen polymeren Bestandteilen,
g) zu den Komponenten a), b) und e) äquivalente Mengen an Gegenionen,
h) Rest Wasser mit einer Härte von nicht mehr als 30 °dH,
wobei nicht mehr als 10 g/l an kondensierten Phosphaten c2) berechnet als PO₄ enthalten sind und das molare Verhältnis der Summe der Komponenten c1) und c2) zu Eisen(III)-Ionen größer als 1 : 1 ist und wobei die freie Alkalität weniger als 6 Punkte beträgt und der pH-Wert zumindest 10,5 ist.

Die vorliegende Erfindung umfasst ebenfalls ein Verfahren zur alkalischen Passivierung von metallischen Bauteilen, die zumindest teilweise Oberflächen von Zink aufweisen, wobei das metallische Bauteil mit einer erfindungsgemäßen alkalischen wässrigen Zusammensetzung (A) in Kontakt gebracht wird.

In einer bevorzugten Ausführungsform des Verfahrens wird das metallische Bauteil für zumindest 30 Sekunden, aber nicht mehr als 4 Minuten bei einer Temperatur von zumindest 30°C, besonders bevorzugt zumindest 40°C, aber nicht mehr als 70°C, besonders bevorzugt nicht mehr als 60°C mit einer alkalischen wässrigen Zusammensetzung (A) in Kontakt gebracht. Die erfindungsgemäßen Zusammensetzungen (A) bewirken, wie bereits geschildert, eine Passivierung der Zinkoberflächen. Die Ausbildung der Passivschicht erfolgt dabei selbst-limitierend, d.h. dass je nach spezifischer Formulierung der Zusammensetzung (A) bestimmte maximale Schichtauflagen realisiert werden können. Die bevorzugten Behandlungs- bzw. Kontaktzeiten sollten im erfindungsgemäßen Verfahren so gewählt sein, dass die Schichtauflage an Eisen zumindest 20 mg/m² beträgt. Die Behandlungs- und Kontaktzeiten für die Realisierung einer solchen Mindestschichtauflage variieren je nach Applikationsart und hängen insbesondere von der auf die zu behandelnde Metalloberfläche einwirkenden Strömung der wässrigen Fluids ab. So erfolgt die Ausbildung der Passivierung in Verfahren, bei denen die Zusammensetzung durch Spritzen aufgebracht wird, rascher als in Tauchapplikationen. Unabhängig von der Applikationsart werden durch die erfindungsgemäßen Zusammensetzungen (A) aufgrund des selbst-limitierenden Passivschichtaufbaus keine Schichtauflagen an Eisen deutlich oberhalb von 200 mg/m² erzielt.
Für eine hinreichende Schichtausbildung und optimale haftungsvermittelnde Eigenschaften der Passivschichten auf den Zinkoberflächen, die durch In-Kontakt-bringen der erfindungsgemäßer Zusammensetzungen (A) mit einem metallischen Bauteil, das zumindest teilweise Oberflächen von Zink aufweist, sollten unmittelbar nach der alkalischen Passivierung mit oder ohne nachfolgendem Spülschritt Schichtauflagen an Eisen von zumindest 20 mg/m², aber nicht mehr als 150 mg/m² realisiert vorliegen.
Das erfindungsgemäße Verfahren ist insbesondere in der Vorbehandlung von Automobilkarosserien von technischer Bedeutung, da die alkalische Passivierung der alkalischen Reinigung der Karosserie unmittelbar, d.h. ohne dazwischenliegendem Spülschritt, nachfolgen kann. Enthält die erfindungsgemäße Zusammensetzung (A) zusätzlich nicht-ionische Tenside, so kann die alkalische Reinigung der Karosserie und die alkalische Passivierung der Zinkoberflächen in einem Schritt erfolgen. Eine Trennung von alkalischer Reinigungs- und alkalischer Passivierungsstufe durch eine Spülstufe ist also genauso wenig erforderlich wie die Durchführung von Reinigung und alkalischer Passivierung in zwei Verfahrensschritten und unterschiedlichen Bädern.

Dementsprechend zeichnet sich ein erfindungsgemäßes Verfahren insbesondere zumindest dadurch aus, dass das metallische Bauteil, das zumindest teilweise Oberflächen von Zink aufweist, zunächst in einem Reinigungs- und Entfettungsbad mit einem alkalischen Reiniger in Kontakt gebracht wird, wobei der alkalische Reiniger vorzugsweise einen pH-Wert im Bereich von 9-14 aufweist, ohne dass vor dem nachfolgenden In-Kontakt-bringen mit der alkalischen wässrigen Zusammensetzung (A) ein Spülschritt erfolgt.

Im erfindungsgemäßen Verfahren wird, wie bereits erörtert wurde, wird eine anorganische Passivierungsschicht enthaltend Eisen und Phosphat auf den Zinkoberflächen erzeugt, während auf den übrigen Oberflächen des metallischen Bauteils, die bspw. Oberflächen von Eisen, Stahl und/oder Aluminium sein können, keine Abscheidung einer solchen anorganischen Schicht nachgewiesen werden konnte. Die spezifische Abscheidung der Passivschicht auf den Zinkoberflächen führt überraschenderweise zu einer deutlichen Verbesserung der Korrosionsschutzeigenschaften dieser Oberflächen, wenn zusätzlich eine saure Passivierung des gesamten metallischen Bauteils vorgenommen wird. Eine solche saure Passivierung ist eine in der Automobilindustrie übliche Maßnahme zur Vorbehandlung vor einem organischen Decklackaufbau, der standardmäßig mit einer Tauchlackierung der vorbehandelten Karosserie beginnt.
Das erfindungsgemäße Verfahren ist demnach besonders vorteilhaft, wenn der alkalischen Passivierung in einem weiteren Verfahrensschritt eine saure Passivierung mit dazwischenliegendem Spülschritt nachfolgt, wobei die saure Passivierung durch In-Kontakt-bringen des metallischen Bauteils mit einer sauren wässrigen Zusammensetzung (B) vollzogen wird, die insgesamt zumindest 5 ppm, jedoch insgesamt nicht mehr als 1500 ppm an wasserlöslichen anorganischen Verbindungen der Elemente Zirconium, Titan und/oder Hafnium bezogen auf die vorgenannten Elemente enthält und vorzugsweise auch solche wasserlöslichen anorganischen Verbindungen, die Fluorid-Ionen freisetzen.
Die wässrige Zusammensetzung (B) der sauren Passivierung im zuvor beschriebenen bevorzugten erfindungsgemäßen Verfahren ist vorzugsweise chromfrei, d.h. sie enthält weniger als 10 ppm, vorzugsweise weniger als 1 ppm Chrom, insbesondere kein Chrom(VI). Weiterhin bevorzugt sind solche saure wässrige Zusammensetzungen (B) im erfindungsgemäßen Verfahren, die als wasserlösliche Verbindungen der Elemente Zirconium, Titan und/oder Hafnium lediglich wasserlösliche Verbindungen der Elemente Zirconium und/oder Titan, besonders bevorzugt wasserlösliche Verbindungen des Elements Zirconium enthalten. Bevorzugte wasserlösliche Verbindungen der Elemente Zirconium und/oder Titan sind Verbindungen, die in wässriger Lösung in Anionen von Fluorokomplexen der Elemente Titan und/oder Zirconium dissozieren. Solche bevorzugten Verbindungen sind beispielsweise H₂ZrF₆, K₂ZrF₆, Na₂ZrF₆ und (NH₄)₂ZrF₆ und die analogen Titan-Verbindungen. Auch fluorfreie Verbindungen der Elemente Titan und/oder Zirconium können als wasserlösliche Verbindungen erfindungsgemäß eingesetzt werden, beispielsweise (NH₄)₂Zr(OH)₂(CO₃)₂ oder TiO(SO₄). Die saure wässrige Zusammensetzung (B) enthält in einem erfindungsgemäßen Verfahren bevorzugt als wasserlösliche anorganische Verbindungen, die in Kupfer-Ionen dissozieren, insbesondere zumindest 1 ppm, aber nicht mehr als 50 ppm an Kupfer-Ionen.

### Ausführungsbeispiele:

Einzelne Verfahrensschritte in einer Spritzanlage zur Vorbehandlung von verzinkten Stahlblechen (HDG: Gardobond^{®} EA; ZE: Gardobond^{®} MBZE5; Fa. Chemetall):
A. Alkalische Reinigung (pH 11):
   3 Gew.-% Ridoline^{®} 1574A (Fa. Henkel); 0,4 Gew.-% Ridosol^{®} 1270 (Fa. Henkel)
   enthaltend H₃PO₄, K₄P₂O₇, Natriumglukonat, Natriumsalz der Hydroxyethan-1,1-Diphosphonsäure, KOH
   Behandlungsdauer bei 60 °C und 1 bar Spritzdruck: 120 Sekunden
B. Spülen mit vollentsalztem Wasser ( <1µScm⁻¹)
C. Alkalische Passivierung:
   Zusammensetzung (A) bestehend aus
   1,09 Gew.-% KOH
   0,19 Gew.-% H₃PO₄
   0,22 Gew.-% K₄P₂O₇
   0,06 Gew.-% Natriumglukonat
   0,04 Gew.-% Natriumsalz der Hydroxyethan-1,1-Diphosphonsäure
   0,23 Gew.-% Fe(NO₃)₃·9H₂O
   Rest vollentsalztes Wasser ( <1 µScm⁻¹)
   pH-Wert 13
   Freie Alkalität: 2 Punkte
   Behandlungsdauer bei 55 °C und 1 bar Spritzdruck: 60 Sekunden
D. Saure Passivierung:
   Zusammensetzung (B) bestehend aus
   0,34 g/l H₂ZrF₆
   0,12 g/l Ammoniumbifluorid
   39 ppm Cu(NO₃)₂·3H₂O
   Rest vollentsalztes Wasser ( <1µScm⁻¹)
   pH-Wert 4
   Behandlungsdauer bei 30 °C und 1 bar Spritzdruck: 120 Sekunden
E. Lackaufbau:
   Cathoguard^{®} 500 (Fa. BASF): Schichtdicke 20 - 22 µm

Der Einfluss des pH-Wertes auf die passivierende Schichtausbildung auf Zinkoberflächen durch In-Kontakt-bringen mit Zusammensetzungen (A) ist in Tab. 1 wiedergegeben und zeigt deutlich, dass hinreichende Schichtauflagen an Eisen erst oberhalb eines pH-Wertes von 11 erzielt werden.

| Tab.1 | | | |
|---|---|---|---|
| Einfluss des pH-Wertes auf die Schichtausbildung auf Zinkblechen (Titanzinkbleche nach DIN EN 988: 99,995 At.-% Zn; Fa. Cinkarna) während der alkalischen Passivierung mit Zusammensetzungen gemäß einer Verfahrensabfolge A-B-C, wobei der pH-Wert der Zusammensetzungen im Schritt C in Gegenwart eines NaHCO₃/Na₂CO₃ Puffersystems mit Natronlauge eingestellt wurde | | | |
| | | | |
| pH-Wert | 10,4 | 11,2 | 12,0 |
| Freie Alkalität | 2,6 | 5,0 | 5,0 |
| Schichtauflage* Eisen in mg/m² | - | 18 | 30 |
| Tüpfeltest** auf Phosphat | negativ | negativ | positiv |
| * gemessen mit Röntgenfluoreszenzanalysator Niton^{®} XL3t 900 (Fa. Thermo Fisher Scientific) | | | |
| ** Tüpfeltest mit Vanadat-Molybdat-Reagenz: Gelbfärbung = "positiv" | | | |

Tab. 2 zeigt den Einfluss der alkalischen Passivierung in einem erfindungsgemäßen Verfahren (Verfahrensfolge A-C-B-D-B-E) auf die korrosive Unterwanderung des kathodischen Tauchlacks auf verzinktem Stahlband und die Ergebnisse im Steinschlagtest. Die mit dem erfindungsgemäßen Verfahren erzielten Korrosionswerte und Lackhaftungswerte sind im Vergleich zu einem Verfahren, dass lediglich die alkalische Reinigung als Vorbehandlung vor einer sauren Passivierung und anschließenden Tauchlackierung vorsieht (Verfahrensfolge A-B-D-B-E), deutlich verbessert.

| Tab.2 | | | | |
|---|---|---|---|---|
| Verschiedene Verfahrensabfolgen zur korrosionsschützenden Vorbehandlung von verzinktem Bandstahl | | | | |
| | | | | |

| | Verfahrensfolge | U/2* in mm | K-Wert** | Schichtauflage*** Eisen in mg/m² |
|---|---|---|---|---|
| HDG | A-B-D-B-E | 4,3 | 5,0 | - |
| | A-C¹-B-D-B-E | 3,5 | 4,6 | 218 |
| | A-C²-B-D-B-E | 3,2 | 3,7 | 55 |
| | A-C-B-D-B-E | 2,8 | 3,0 | 64 |
| ZE | A-B-D-B-E | 3,3 | 4,6 | - |
| | A-C¹-B-D-B-E | 3,0 | 4,0 | 218 |
| | A-C²-B-D-B-E | 2,7 | 3,4 | 55 |
| | A-C-B-D-B-E | 2,3 | 2,7 | 64 |
| ¹ | freie Alkalität: 8 Punkte | | | |
| ² | ohne H₃PO₄, K₄P₂O₇, Natriumsalz der Hydroxyethan-1,1-Diphosphonsäure; Natriumglukonat : 0,25 Gew.-%; | | | |
| | freie Alkalität 2,5 Punkte | | | |
| * | Unterwanderung am Ritz | | | |
| | nach 10 Runden VDA 621-415 Wechselklimatest | | | |
| ** | Steinschlagtest DIN ISO 20567-1 | | | |
| | nach 10 Runden VDA 621-415 Wechselklimatest | | | |
| *** | gemessen mit Röntgenfluoreszenzanalysator Niton^{®} XL3t 900 (Fa. Thermo Fisher Scientific) auf Zinktitanblechen nach DIN EN 988 | | | |

Erfolgt die alkalische Passivierung bei einer hohen freien Alkalität (Verfahrensfolge A-C¹-B-D-B-E) wird die Schichtauflage an Eisen auf den Zinkoberflächen zwar stark erhöht, jedoch verschlechtert sich insbesondere die Lackhaftung gemäß Steinschlagtest. Die Verschlechterung hinsichtlich der Lackhaftungseigenschaften ist bereits bei einer freien Alkalität von 6 Punkten signifikant.
Eine Verfahrensfolge A-C²-B-D-B-E, die sich von einem erfindungsgemäßen Verfahren lediglich dadurch unterscheidet, dass im alkalischen Passivierungsschritt eine Zusammensetzung eingesetzt wird, die kein Phosphat und kein Pyrophosphat enthält, zeigt trotz hinreichender Schichtauflage an Eisen einen im Vergleich zum erfindungsgemäßen Verfahren schlechteren Korrosionsschutz.

## Patentansprüche

1. Wässrige alkalische Zusammensetzung (A) enthaltend
a) zumindest 50 ppm an Eisen(III)-Ionen,
b) zumindest 100 ppm an Phosphat-Ionen,
c) zumindest 100 ppm an Komplexbildnern ausgewählt aus organischen Verbindungen c1), die zumindest eine funktionale Gruppe ausgewählt aus -COOX, -OPO₃X und/oder -PO₃X aufweisen, wobei X entweder ein H-Atom oder ein Alkali- und/oder Erdalkalimetall-Atom darstellt, und/oder kondensierten Phosphaten c2) berechnet als PO₄, wobei die Zusammensetzung eine freie Alkalität von zumindest 1 Punkt, aber weniger als 6 Punkten, und einen pH-Wert von zumindest 10,5 aufweist.

2. Zusammensetzung (A) gemäß Anspruch 1, **dadurch gekennzeichnet, dass** diese eine freie Alkalität von weniger als 5 Punkten, aber vorzugsweise von zumindest 2 Punkten aufweist.

3. Zusammensetzung (A) gemäß einem oder beiden der vorherigen Ansprüche, **dadurch gekennzeichnet, dass** zumindest 100 ppm, aber nicht mehr als 2000 ppm an Eisen(III)-Ionen enthalten sind.

4. Zusammensetzung (A) gemäß einem oder mehreren der vorherigen Ansprüche, **dadurch gekennzeichnet, dass** das massenbezogene Verhältnis von Eisen(III)-Ionen zu PhosphatIonen in einem Bereich von 1 : 20 bis 1 : 2 liegt.

5. Zusammensetzung (A) gemäß einem oder mehreren der vorherigen Ansprüche, **dadurch gekennzeichnet, dass** das molare Verhältnis aller Komponenten c) zu Eisen(III)-Ionen größer als 1 : 1 ist und vorzugsweise zumindest 2 : 1, besonders bevorzugt zumindest 5 beträgt.

6. Zusammensetzung (A) gemäß einem oder mehreren der vorherigen Ansprüche, **dadurch gekennzeichnet, dass** als Komponenten c) kondensierte Phosphate c2) enthalten sind, die vorzugsweise ausgewählt sind aus Pyrophosphaten, Tripolyphosphaten und/oder Polyphosphaten.

7. Zusammensetzung (A) gemäß Anspruch 6, **dadurch gekennzeichnet, dass** neben der Komponente c2) organische Verbindungen c1) enthalten sind, die im protonierten Zustand vorzugsweise eine Säurezahl von zumindest 250 aufweisen,

8. Zusammensetzung (A) gemäß den Ansprüchen 5, 6 und 7, **dadurch gekennzeichnet, dass** die organischen Verbindungen c1) ausgewählt sind α-, β- und/oder γ -Hydroxycarbonsäuren, Hydroxyethan-1,1-Diphosphonsäure, [(2-hydroxyethyl)(phosphonomethyl)amino]-methylphosphonsäure, Diethylenetriaminpentakis(methylenphosphonsäure) und/oder Amino-tris-(methylenphosphonsäure) sowie deren Salze, wobei das molare Verhältnis von Komponenten c1) zu Eisen(III)-Ionen kleiner als 1 : 1, vorzugsweise kleiner als 3 : 4 ist, aber vorzugsweise zumindest 1 : 5 beträgt.

9. Zusammensetzung (A) gemäß einem oder mehreren der vorherigen Ansprüche, **dadurch gekennzeichnet, dass** zusätzlich nichtionische Tenside enthält, die vorzugsweise ausgewählt sind aus einem oder mehreren ethoxylierten und/oder propoxylierten C10-C18 Fettalkoholen mit insgesamt zumindest zwei aber nicht mehr als 12 Alkoxygruppen, die teilweise mit einem Alkylrest endgrupppenverschlossen vorliegen können.

10. Zusammensetzung (A) gemäß einem oder mehreren der vorherigen Ansprüche, **dadurch gekennzeichnet, dass** weniger als insgesamt 10 ppm an ionischen Verbindungen der Metalle Nickel, Cobalt, Mangan, Molybdän, Chrom und/oder Cer, insbesondere weniger als 1 ppm an ionischen Verbindungen der Metalle Nickel und/oder Cobalt enthalten ist.

11. Zusammensetzung (A) gemäß einem oder mehreren der vorherigen Ansprüche enthaltend
a) 0,05-2 g/kg an Eisen(III)-Ionen,
b) 0,1-4 g/kg an Phosphat-Ionen,
c) zumindest 0,1 g/kg an Komplexbildnern ausgewählt aus organischen Verbindungen c1), die zumindest eine funktionale Gruppe ausgewählt aus -COOX, -OPO₃X und/oder -PO₃X aufweisen, wobei X entweder ein H-Atom oder ein Alkali- und/oder Erdalkalimetall-Atom darstellt, und/oder kondensierten Phosphaten c2) berechnet als PO₄,
d) insgesamt 0,01-10 g/kg an nichtionischen Tensiden,
e) insgesamt weniger als 10 ppm an ionischen Verbindungen der Metalle Nickel, Cobalt, Mangan, Molybdän, Chrom und/oder Cer, insbesondere weniger als 1 ppm an ionischen Verbindungen der Metalle Nickel und/oder Cobalt,
wobei nicht mehr als 10 g/l an kondensierten Phosphaten c2) berechnet als PO₄ enthalten sind und das molare Verhältnis der Summe der Komponenten c1) und c2) zu Eisen(III)-Ionen größer als 1 : 1 ist.

12. Verfahren zur alkalischen Passivierung von metallischen Bauteilen, die zumindest teilweise Oberflächen von Zink oder Zinklegierungen aufweisen, **dadurch gekennzeichnet, dass** das metallische Bauteil mit einer alkalischen wässrigen Zusammensetzung (A) gemäß einem oder mehreren der Ansprüche 1 bis 11 in Kontakt gebracht wird.

13. Verfahren gemäß Anspruch 12, **dadurch gekennzeichnet, dass** die Oberflächen von Zink oder Zinklegierungen des metallischen Bauteils unmittelbar nach der alkalischen Passivierung mit oder ohne nachfolgendem Spülschritt eine Schichtauflage von Eisen aufweisen, die zumindest 20 mg/m², aber nicht mehr als 150 mg/m² beträgt.

14. Verfahren gemäß einem oder beiden der Ansprüche 12 und 13, **dadurch gekennzeichnet, dass** das metallische Bauteil zunächst in einem Reinigungs- und Entfettungsbad mit einem alkalischen Reiniger in Kontakt gebracht wird, wobei der alkalische Reiniger einen pH-Wert im Bereich von 9-14 aufweist, ohne dass vor dem nachfolgenden In-Kontakt-bringen mit der alkalischen wässrigen Zusammensetzung (A) ein Spülschritt erfolgt.

15. Verfahren gemäß einem oder mehreren der Ansprüche 12 bis 14, **dadurch gekennzeichnet, dass** der alkalischen Passivierung in einem weiteren Verfahrensschritt eine saure Passivierung mit dazwischenliegendem Spülschritt folgt, wobei die saure Passivierung durch In-Kontakt-bringen des metallischen Bauteils mit einer sauren wässrigen Zusammensetzung (B) erfolgt, die insgesamt zumindest 5 ppm, jedoch insgesamt nicht mehr als 1500 ppm an wasserlöslichen anorganischen Verbindungen der Elemente Zirconium, Titan und/oder Hafnium bezogen auf die vorgenannten Elemente und vorzugsweise wasserlösliche anorganische Verbindungen, die Fluorid-Ionen freisetzen, enthält.

## Claims

1. An aqueous alkaline composition (A) containing
a) at least 50 ppm iron(III) ions,
b) at least 100 ppm phosphate ions,
c) at least 100 ppm of complexing agents selected from organic compounds c1) that comprise at least one functional group selected from -COOX, -OPO₃X, and/or -PO₃X, where X represents either a hydrogen atom or an alkali and/or alkaline-earth metal atom, and/or condensed phosphates c2) calculated as PO₄,
the composition having a free alkalinity of at least 1 point but less than 6 points, and a pH of at least 10.5.

2. The composition (A) according to Claim 1, **characterized in that** it has a free alkalinity of less than 5 points but by preference of at least 2 points.

3. The composition (A) according to one or both of the preceding claims, **characterized in that** at least 100 ppm but no more than 2000 ppm iron(III) ions are contained.

4. The composition (A) according to one or more of the preceding claims, **characterized in that** the mass-based ratio of iron(III) ions to phosphate ions is in a range from 1:20 to 1:2.

5. The composition (A) according to one or more of the preceding claims, **characterized in that** the molar ratio of all components c) to iron(III) ions is greater than 1:1 and by preference at least 2:1, particularly preferably at least 5.

6. The composition (A) according to one or more of the preceding claims, **characterized in that** condensed phosphates c2) that are by preference selected from pyrophosphates, tripolyphosphates, and/or polyphosphates are contained as component c).

7. The composition (A) according to Claim 6, **characterized in that** organic compounds c1) that in the protonated state by preference have an acid number of at least 250 are contained alongside component c2).

8. The composition (A) according to Claims 5, 6, and 7, **characterized in that** the organic compounds c1) are selected from α-, β, and/or γ-hydroxycarboxylic acids, hydroxyethane-1,1-diphosphonic acid, [(2-hydroxyethyl)(phosphonomethyl)amino]methylphosphonic acid, diethylenetriamine pentakis(methylenephosphonic acid), and/or amino-tris-(methylenephosphonic acid) as well as salts thereof, the molar ratio of components c1) to iron(III) ions being less than 1:1, by preference less than 3:4, but by preference being equal to at least 1:5.

9. The composition (A) according to one of more of the preceding claims, **characterized in that** it additionally contains nonionic surfactants that by preference are selected from one or more ethoxylated and/or propoxylated C10 to C18 fatty alcohols having in total at least two but no more than 12 alkyoxy groups, which can be present in part end-capped with an alkyl residue.

10. The composition (A) according to one or more of the preceding claims, **characterized in that** less than in total 10 ppm of ionic compounds of the metals nickel, cobalt, manganese, molybdenum, chromium, and/or cerium, in particular less than 1 ppm of ionic compounds of the metals nickel and/or cobalt, is contained.

11. The composition (A) according to one or more of the preceding claims, containing
a) 0.05 to 2 g/kg iron(III) ions,
b) 0.1 to 4 g/kg phosphate ions,
c) at least 0.1 g/kg of complexing agents selected from organic compounds c1) that comprise at least one functional group selected from -COOX, -OPO₃X, and/or -PO₃X, where X represents either a hydrogen atom or an alkali and/or alkaline-earth metal atom, and/or condensed phosphates c2) calculated as PO₄,
d) in total 0.01 to 10 g/kg of nonionic surfactants,
e) in total less than 10 ppm of ionic compounds of the metals nickel, cobalt, manganese, molybdenum, chromium, and/or cerium, in particular less than 1 ppm of ionic compounds of the metals nickel and/or cobalt,
no more than 10 g/I of condensed phosphates c2) calculated as PO₄ being contained, and the molar ratio of the sum of components c1) and c2) to iron(III) ions being greater than 1:1.

12. A method for alkaline passivation of metallic components that at least in part comprise surfaces of zinc or zinc alloys, **characterized in that** the metallic component is brought into contact with an alkaline aqueous composition (A) according to one or more of Claims 1 to 11.

13. The method according to Claim 12, **characterized in that** the surfaces of zinc or zinc alloy of the metallic component exhibit, immediately after alkaline passivation with or without a subsequent rinsing step, a surface coverage of iron that is equal to at least 20 mg/m² but no more than 150 mg/m².

14. The method according to one or both of Claims 12 and 13, **characterized in that** the metallic component is firstly brought into contact with an alkaline cleaner in a cleaning and degreasing bath, the alkaline cleaner having a pH in the range from 9 to 14, with no rinsing step occurring before it is then brought into contact with the alkaline aqueous composition (A).

15. The method according to one or more of Claims 12 to 14, **characterized in that** the alkaline passivation is followed, in a further method step, by an acid passivation with an interposed rinsing step, the acid passivation being accomplished by bringing the metallic component into contact with an acid aqueous composition (B) that contains in total at least 5 ppm but in total no more than 1500 ppm of water-soluble inorganic compounds of the elements zirconium, titanium, and/or hafnium, based on the aforesaid elements, and by preference water-soluble inorganic compounds that release fluoride ions.

## Revendications

1. Composition alcaline aqueuse (A) contenant :
a) au moins 50 ppm d'ions de fer(III) ;
b) au moins 100 ppm d'ions de phosphate ;
c) au moins 100 ppm de formateurs de complexes choisis parmi des composés organiques c1) qui présentent au moins un groupe fonctionnel choisi parmi un groupe -COOX, un groupe -OPO₃X et/ou un groupe -PO₃X, dans lesquels X représente, soit un atome d'hydrogène, soit un atome de métal alcalin et/ou de métal alcalino-terreux, et/ou des phosphates condensés c2) calculés comme PO₄, dans laquelle la composition présente une alcalinité libre d'au moins 1 point, mais inférieure à 6 points, et une valeur de pH d'au moins 10,5.

2. Composition (A) selon la revendication 1, **caractérisée en ce qu'**elle présente une alcalinité libre inférieure à 5 points, mais de préférence d'au moins 2 points.

3. Composition (A) selon l'une quelconque des revendications précédentes ou les deux, **caractérisée en ce qu'**elle contient au moins 100 ppm, mais pas plus de 2000 ppm d'ions de fer(III).

4. Composition (A) selon une ou plusieurs des revendications précédentes, **caractérisée en ce que** le rapport en masse des ions de fer(III) aux ions de phosphate se situe dans la plage de 1 : 20 à 1 : 2.

5. Composition (A) selon une ou plusieurs des revendications précédentes, **caractérisée en ce que** le rapport molaire de tous les composants c) aux ions de fer(III) est supérieur à 1 : 1 et s'élève de préférence à au moins 2 : 1, de manière particulièrement préférée à au moins 5.

6. Composition (A) selon une ou plusieurs des revendications précédentes, **caractérisée en ce qu'**elle contient, à titre des composants c), des phosphates condensés c2) qui sont choisis de préférence parmi des pyrophosphates, des tripolyphosphates et/ou des polyphosphates.

7. Composition (A) selon la revendication 6, **caractérisée en ce qu'**elle contient, à côté du composant c2), des composés organiques c1) qui présentent, à l'état protoné, de préférence un indice d'acide d'au moins 250.

8. Composition (A) selon la revendication 5, 6 et 7, **caractérisée en ce que** les composés organiques c1) sont choisis parmi des acides α-, β- et/ou γ-hydroxycarboxyliques, l'acide hydroxyéthane-1,1-diphosphonique, l'acide [(2-hydroxyéthyl)(phosphonométhyl)amino]méthylphosphonique, l'acide diéthylènetriaminepentakis(méthylènephosphonique), et/ou l'acide aminotris-(méthylènephosphonique) ainsi que leurs sels, le rapport molaire des composants c1) aux ions de fer(III) étant inférieur à 1 : 1, de préférence inférieur à 3 : 4, mais s'élevant de préférence à au moins 1 : 5.

9. Composition (A) selon une ou plusieurs des revendications précédentes, **caractérisée en ce qu'**elle contient en outre des agents tensioactifs non ioniques, qui sont choisis de préférence parmi un ou plusieurs alcools gras en C₁₀-C₁₈ éthoxylés et/ou propoxylés, comprenant au total au moins deux, mais pas plus de 12 groupes alcoxy qui peuvent être présents en partie à l'état fermé par des groupes terminaux avec un radical alkyle.

10. Composition (A) selon une ou plusieurs des revendications précédentes, **caractérisée en ce qu'**elle contient au total moins de 10 ppm de composés ioniques des métaux de nickel, de cobalt, de manganèse, de molybdène, de chrome et/ou de cérium, en particulier moins de 1 ppm de composés ioniques des métaux de nickel et/ou de cobalt.

11. Composition (A) selon une ou plusieurs des revendications précédentes contenant
a) de 0,05 à 2 g/kg d'ions de fer(III) ;
b) de 0,1 à 4 g/kg d'ions de phosphate ;
c) au moins 0,1 g/kg de formateurs de complexes choisis parmi des composés organiques c1) qui présentent au moins un groupe fonctionnel choisi parmi un groupe -COOX, un groupe -OPO₃X et/ou un groupe -PO₃X, dans lesquels X représente soit un atome d'hydrogène soit un atome de métal alcalin et/ou de métal alcalino-terreux, et/ou des phosphates condensés c2) calculés comme PO₄ ;
d) au total de 0,01 à 10 g/kg d'agents tensioactifs non ioniques ;
e) au total moins de 10 ppm de composés ioniques des métaux de nickel, de cobalt, de manganèse, de molybdène, de chrome et/ou de cérium, en particulier moins de 1 ppm de composés ioniques des métaux de nickel et/ou de cobalt ;
ne contenant pas plus de 10 g/litre de phosphates condensés c2) calculés comme PO₄ et le rapport molaire de la somme des composants c1) et c2) aux ions de fer(III) étant supérieur à 1 : 1.

12. Procédé pour la passivation alcaline de composants métalliques, qui présentent au moins en partie des surfaces en zinc ou en alliages de zinc, **caractérisé en ce que** le composant métallique est mis en contact avec une composition aqueuse alcaline (A) selon une ou plusieurs des revendications 1 à 11.

13. Procédé selon la revendication 12, **caractérisé en ce que** les surfaces en zinc ou en alliages de zinc du composant métallique présentent, directement après la passivation alcaline, avec ou sans une étape de rinçage ultérieure, une couverture de couche de fer qui s'élève à au moins 20 mg/m², mais qui n'est pas supérieure à 150 mg/m².

14. Procédé selon l'une quelconque des revendications 12 et 13 ou les deux, **caractérisé en ce que** l'élément de construction métallique est d'abord mis en contact, dans un bain de nettoyage et de dégraissage, avec un agent de nettoyage alcalin, l'agent de nettoyage alcalin présentant une valeur de pH dans la plage de 9 à 14, sans passer par une étape de rinçage avant la mise en contact ultérieure avec la composition alcaline aqueuse (A).

15. Procédé selon une ou plusieurs des revendications 12 à 14, **caractérisé en ce que**, fait suite à la passivation alcaline, dans une étape opératoire ultérieure, une passivation acide avec une étape de rinçage intermédiaire, la passivation acide ayant lieu via la mise en contact du composant métallique avec une composition aqueuse acide (B) qui contient au total au moins 5 ppm, mais au total pas plus de 1500 ppm de composés inorganiques solubles dans l'eau des éléments zirconium, titane et/ou hafnium, rapportées aux éléments précités, et de préférence des composés inorganiques solubles dans l'eau qui libèrent des ions fluorure.
